# EUROPÄISCHE PATENTSCHRIFT

(11) **EP 0 507 978 B1**
(45) Veröffentlichungstag und Bekanntmachung des Hinweises auf die Patenterteilung: **08.02.1995**
(21) Anmeldenummer: 91105849.3
(22) Anmeldetag: 12.04.1991
(51) Int. Cl.: F16L 33/207

(54) **Schlauchverbindung**
Hose connection
Raccord de tuyaux souples

(43) Veröffentlichungstag der Anmeldung: 14.10.1992
(73) Patentinhaber: COHNEN BETEILIGUNGS-GMBH & CO. KG, D-35662 Dillenburg (DE)
(72) Erfinder: Trapp, Leo, W-6340 Dillenburg (DE)
(74) Vertreter: Missling, Arne, Dipl.-Ing.

(56) Entgegenhaltungen:
- EP-A- 0 477 704
- WO-A-91/00468
- DE-A- 3 815 168
- DE-A- 3 815 171
- DE-U- 9 005 412
- FR-A- 970 958
- FR-A- 2 543 254
- FR-A- 2 615 266
- US-A- 3 924 883
- US-A- 4 690 435

## Beschreibung

Die Erfindung betrifft eine Schlauchverbindung zur Verbindung eines Schlauches mit einem Rohr nach dem Oberbegriff des Anspruches 1.

Eine derartige Schlauchverbindung ist aus dem DE-GM 90 05 412 bekannt und weist zwei an einem Rohr-Endstück angebrachte Bördelungen unterschiedlichen Außendurchmessers auf. In den Zwischenraum zwischen die Bördelungen greift ein Endwulst einer Preßbuchse ein, die über das Rohr-Endstück zum Klemmen des Schlauches auf diesem aufschiebbar ist. Bei der Verformung der Preßbuchse durch Verringerung Ihres Durchmessers wird der Endwulst zwischen die beiden Bördelungen geklemmt und sicher gehalten. Damit ist es möglich, ein nachträgliches Verrutschen der Preßbuchse auch bei einer stärkeren Schwingungsbelastung zu vermeiden.

Da bei der gattungsgemäßen Schlauchverbindung neben den beiden Bördelungen am freien Ende des Rohr-Endstückes üblicherweise noch ein Haltewulst ausgebildet ist, und da die Preßbuchse als Drehteil ausgebildet ist, ist die bekannte Vorrichtung im Hinblick auf den Herstellungs- und Montageaufwand verbesserungswürdig.

Es ist daher Aufgabe der vorliegenden Erfindung, eine Schlauchverbindung der im Oberbegriff des Anspruches 1 angegebenen Art zu schaffen, die bei Beibehaltung einer sicheren Fixierung des Schlauches durch die Preßbuchse eine Verringerung des Herstellungsaufwandes ermöglicht.

Die Lösung dieser Aufgabe wird durch die Merkmale des Anspruches 1 erreicht.

Die erfindungsgemäße Vorrichtung benötigt zur Fixierung der Preßbuchse und damit des Schlauches nur eine Bördelung. Damit verringert sich der Herstellungsaufwand erheblich, da zum einen, wie gesagt, nur eine Bördelung erforderlich ist und zum anderen die Paßgenauigkeit der Endwulst verringert werden kann, da diese in ihrer Abmessung nicht mehr an den Abstand zwischen einer ersten und einer zweiten Bördelung angepaßt werden muß, wie dies bei der gattungsgemäßen Schlauchverbindung der Fall ist.

Die Anordnung eines Haltewulstes am stirnseitigen Ende ergibt den Vorteil, daß ein Abrutschen des Schlauches vom Rohr sicher verhindert wird.

Das Ausbilden der Preßbuchse als tiefgezogenes Blechteil ergibt den Vorteil einer weiteren Vereinfachung der Fertigung und damit einer Herabsetzung der Gesamtkosten.

Das Vorsehen zweier taschenartiger Haltebereiche für den zwischen der Preßbuchse und dem Rohr-Endstück angeordneten Schlauchwandabschnitt ergibt den Vorteil einer weiteren Verbesserung der Fixierung des Schlauches auf dem Rohr-Endstück.

Schließlich ist es bei der erfindungsgemäßen Schlauchverbindung möglich, das gesamte Rohr oder zumindest das Rohr-Endstück mit einer Oberflächenbeschichtung zu versehen, welche durch die Ausbildung der Bördelung nicht beschädigt oder beeinträchtigt wird. Somit ist es erfindungsgemäß möglich, auf das Rohr eine Überwurfmutter oder ähnliches aufzuschieben, nachdem das Rohr mit einer Oberflächenbeschichtung oder mit einem Oberflächenschutz versehen wurde und bevor die beiden Bördelungen hergestellt werden. Als besonders günstig erweist es sich dabei, die Bördelung und den Haltewulst mit Hilfe eines Kalt- Verformungsvorganges herzustellen, welcher sowohl hinsichtlich des Umformvorganges selbst als auch hinsichtlich der zu verwendenden Werkzeuge so konzipiert ist, daß eine Beschädigung der Korrosionsschicht vermieden wird. Dadurch ist es entbehrlich, das Rohr bzw. das Rohr-Endstück nachfolgend nochmals zu galvanisieren oder oberflächenzuschützen. Die erfindungsgemäße Schlauchverbindung erlaubt somit selbst gegenüber dem gattungsgemäßen Stand der Technik eine erheblich vereinfachte Herstellung, welche sich auch kostenmäßig günstig auswirkt und zu einer wesentlichen Steigerung der Betriebssicherheit führt, da der Korrosionsschutz der erfindungsgemäßen Schlauchverbindung weiter verbessert wird.

Weitere Einzelheiten, Merkmale und Vorteile der Erfindung ergeben sich aus nachfolgender Beschreibung eines Ausführungsbeispieles anhand der Zeichnungen.

Es zeigt:
Fig. 1 eine teilweise geschnittene Seitenansicht einer erfindungsgemäßen Schlauchverbindung nach dem Verformen der Preßbuchse und
Fig. 2 eine der Fig. 1 entsprechende Darstellung vor dem Verformungsvorgang.

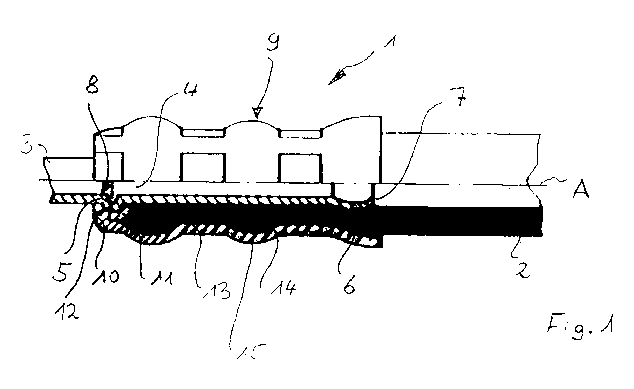

In Fig. 1 ist eine erfindungsgemäße Schlauchverbindung 1 dargestellt, die zur Verbindung eines Schlauches 2 mit einem Rohr 3 dient.

Das Rohr 3 weist ein Rohr-Endstück 4 auf, auf das der Schlauch 2 aufschiebbar ist. Das Rohr-Endstück 4 weist eine erste Bördelung 5 und einen Haltewulst 6 auf, der am freien Ende 7 des Rohr-Endstückes 4 angeordnet ist und auch mit einer Auflaufschräge und einem Verhakungsrand ausgebildet sein kann. Der Haltewulst 6 ist zwar praktisch bei derartigen Schlauchverbindungen immer vorgesehen, jedoch ist es grundsätzlich auch möglich, diesen Haltewulst wegzulassen.

Wie Fig. 1 verdeutlicht, sind die Bördelung 5 und der Haltewulst 6 zueinander beabstandet und im Beispielsfalle ringförmig ausgebildet. Die Bördelung 5 ist hierbei in einem dem freien Ende 7 des Rohr-Endstücks 4 abgewandten Bereich 8 angeordnet, der den Übergangsbereich zum Rohr 3 bildet, mit dem das Rohr-Endstück 4 im Beispielsfalle einstückig verbunden ist.

Die erfindungsgemäße Schlauchverbindung 1 weist ferner eine Preßbuchse 9 auf, die zum Klemmen des Schlauches 2 auf dem Rohr-Endstück 4 dient. Wie die in Fig. 1 geschnittene untere Hälfte der dargestellten Verbindungvorrichtung 1 zeigt, weist die Preßbuchse 9 einen stirnseitigen Endwulst 10 auf. Dieser Endwulst 10 kann beispielsweise durch Umfalzen des freien Endes 11 der Preßbuchse 9 hergestellt werden, wie dies sich im einzelnen aus der Darstellung der Fig. 1 ergibt.

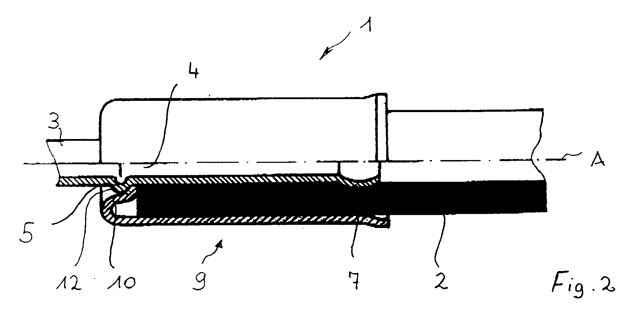

Die Fig. 1 und 2 verdeutlichen ferner, daß der Endwulst 10 eine Ringnut 12 aufweist, die gemäß dem in Fig. 1 veranschaulichten verpreßten Zustand der Preßbuchse 9 in die Bördelung 5 eingreift. Fig. 1 verdeutlicht mithin den Montagezustand der Schlauchverbindung 1, in dem der Schlauch 2 durch die durch den Verpreßvorgang erfolgte Durchmesserverringerung der Preßbuchse 9 sicher auf dem Rohr-Endstück 4 gehalten ist. Die Lagesicherung der Preßbuchse 9 erfolgt hierbei durch den Eingriff der Bördelung 5 in die Ringnut 12, der eine Lagesicherung der Preßbuchse in beide Richtungen der Axialerstreckung A des Schlauches 2 bzw. des Rohres 3 ergibt.

Die Fig. 1 und 2 verdeutlichen ferner, daß die Bördelung 5 eine geringere Abmessung, gesehen in Axialrichtung A, aufweist, als die entsprechende Abmessung des Haltewulstes 6.

Ferner verdeutlicht Fig. 1, daß die Preßbuchse 9 im Montagezustand im Beispielsfalle zwei taschenförmige Haltebereiche 13 und 14 aufweist, die den zwischen der Preßbuchse 9 und dem Rohr-Endstück 4 angeordneten Schlauchwandabschnitt 15 teilweise umfassen, was die Lagesicherung des Schlauches 2 auf dem Rohr-Endstück 4 weiter verbessert.

Fig. 2 verdeutlicht den Zustand vor der Durchmesserverringerung der Preßbuchse 9, jedoch nach dem Aufschieben des Schlauchwandabschnittes 15 auf das Rohr-Endstück 4. Fig. 2 zeigt, daß die Abmessung der Preßbuchse 9 im nicht-verpreßten Zustand so ist, daß sie problemlos über dem auf das Rohr-Endstück 4 geschobenen Schlauchwandabschnitt 15 positioniert und danach zum Klemmen des Schlauchwandabschnittes 15 verpreßt werden kann. Ferner wird die glattflächige Außenkontur der Preßbuchse 9 vor dem Verpressen deutlich.

## Patentansprüche

1. Schlauchverbindung (1) zum Verbinden eines Schlauches (2) mit einem Rohr (3), bestehend aus
- einem Rohr-Endstück (4), auf das der Schlauch (2) aufschiebbar ist und das eine ringförmige Bördelung (5) aufweist, die an einem dem freien Ende (7) abgewandten Bereich (8) des Rohr-Endstückes (4) angeordnet ist und
- einer als tiefgezogenes Blechteil ausgebildeten Preßbuchse (9) zum Klemmen des Schlauches (2) auf dem Rohrendstück (4) zwischen dem Bereich (8) und dem freien Ende (7) des Rohr-Endstückes (4), den Bereich (8) einschließend, mit einer an der Preßbuchse (9) stirnseitigen Endwulst (10),
dadurch gekennzeichnet, daß
(a) die Endwulst (10) der Preßbuchse (9) als in das Innere der Preßbuchse (9) aus dieser um etwa 180° abgefalteter Kragen ausgebildet ist und
(b) bei zusammengebauter Schlauchverbindung (1) an dem Kragen der Endwulst (10) eine die Bördelung (5) überfangende Ringnut (12) angeformt und ein an die Ringnut (12) anschließendes, das freie Stirnende der Endwulst (10) bildendes Kragenstück zwischen der Bördelung (5) und dem Ende des Schlauches (2) angeordnet ist.

2. Schlauchverbindung nach Anspruch 1, dadurch gekennzeichnet, daß an dem freien Ende (7) des Rohr-Endstückes (4) ein Haltewulst (6) des Rohr-Endstückes (4) angeordnet ist.

3. Schlauchverbindung nach Anspruch 2, dadurch gekennzeichnet, daß die an dem dem freien Ende (7) abgewandten Bereich (8) des Rohr-Endstückes (4) angeordnete Bördelung (5) in Richtung der Längsachse (A) des Rohr-Endstückes (4) kürzer ist als der an dem freien Ende (7) angeordnete Haltewulst (6).

4. Schlauchverbindung nach einem der Ansprüche 1 bis 3, dadurch gekennzeichnet, daß die Preßbuchse (9) im zusammengebauten Zustand der Schlauchverbindung (1) zumindest zwei taschenförmige Haltebereiche (13,14) für den zwischen der Preßbuchse (9) und dem Rohr-Endstück (4) angeordneten Schlauchwandabschnitt (15) aufweist.

5. Schlauchverbindung nach einem der Ansprüche 1 bis 4, dadurch gekennzeichnet, daß das Rohr-Endstück (4) beschichtet ist.

## Claims

1. A hose connection (1) for connecting a hose (2) to a pipe (3), consisting of
- a pipe end-piece (4) onto which the hose (2) can be pushed and which has an annular flange (5) arranged on a region (8) of the pipe end-piece (4) which is facing away from the free end (7) and
- a compressive sleeve (9)- in the form of a deep-drawn sheet-metal part- for clamping the hose (2) on the pipe end-piece (4) between the region (8) and the free end (7) of the pipe end-piece (4), enclosing the region (8), with an end swelling (10) on the end face of the compressive sleeve (9),
characterised in that
(a) the end swelling (10) of the compressive sleeve (9) is in the form of a collar folded into the interior of the compressive sleeve (9) from the latter through approximately 180° and
(b) when the hose connection (1) is assembled, an annular groove (12) covering the flange (5) is moulded on the collar of the end swelling (10) and a collar portion adjacent the annular groove (12) and forming the free front end of the end swelling (10) is arranged between the flange (5) and the end of the hose (2).

2. A hose connection in accordance with Claim 1, characterised in that a holding swelling (6) of the pipe end-piece (4) is arranged on the free end (7) of the pipe end-piece (4).

3. A hose connection in accordance with Claim 2, characterised in that the flange (5) arranged at the region (8) of pipe end-piece (4) which is facing away from the free end (7) is shorter in the direction of the longitudinal axis (A) of the pipe end-piece (4) than the holding swelling (6) arranged on the free end (7).

4. A hose connection in accordance with any one of Claims 1 to 3, characterised in that in the assembled state of the hose connection (1), the compressive sleeve (9) has at least two pocket-shaped holding regions (13, 14) for the hose wall portion (15) arranged between the compressive sleeve (9) and the pipe end-piece (4).

5. A hose connection in accordance with any one of Claims 1 to 4, characterised in that the pipe end-piece (4) is coated.

## Revendications

1. Raccord (1) pour tuyau flexible, destiné à raccorder un tuyau flexible (2) à un tuyau rigide (3), composé de :
- un tronçon du tuyau rigide (4), sur lequel sur le tuyau flexible peut être enfilé et qui présente une collerette annulaire (5), disposé dans une zone (8) de ce tronçon du tuyau rigide (4) opposée à son extrémité libre (7) et
- une douille de serrage (9) constituée d'un pièce de tôle formée par emboutissage profond destinée à serrer le tuyau flexible (2) sur le tronçon de tuyau rigide (4) entre la zone (8) et l'extrémité libre (7) de ce tronçon de tuyau rigide (4), entourant cette zone (8), et présentant un bourrelet d'extrémité (10) disposé frontalement sur cette douille de serrage (9),
caractérisé en ce que
(a) le bourrelet d'extrémité (10) de la douille de serrage (9) est constitué par un collet replié à l'intérieur de cette douille de serrage (9) sur environ 180 degrés et
(b) lorsque le raccord (1) est assemblé, une rainure annulaire (12) formée dans le du bourrelet d'extrémité (10) se plaque sur la collerette (5) et une partie du collet adjacente à cette rainure annulaire (12), et constituant l'extrémité frontale libre du bourrelet d'extrémité (10) se trouve entre la collerette (5) et l'extrémité du tuyau flexible (2).

2. Raccord pour tuyau flexible selon la revendication 1, caractérisé en ce qu'un bourrelet de maintien (6) est ménagé à l'extrémité libre (7) du tronçon de tuyau rigide (4).

3. Raccord pour tuyau flexible selon la revendication 2, caractérisé en ce que la collerette (5) ménagée dans la zone (8) du bout de tuyau rigide (4) opposée à l'extrémité libre (7) est plus courte, dans la direction de l'axe longitudinal (A) du bout de tuyau rigide (4) que le bourrelet de maintien (6) ménagé à l'extrémité libre (7).

4. Raccord pour tuyau flexible selon l'une des revendications 1 à 3, caractérisé en ce que la douille de serrage (9), en l'état assemblé du raccord pour tuyau flexible (1), présente au moins deux zones de maintien en forme de poche (13,14) pour la partie de paroi du tuyau flexible (15) située entre la douille de serrage (9) et le troncon de tuyau rigide (4).

5. Raccord pour tuyau flexible selon l'une des revendications 1 à 4, caractérisé en ce que le bout de tuyau rigide (4) est pourvu d'un revêtement.
